# EUROPÄISCHE PATENTANMELDUNG

(11) **EP 1 970 612 A1**
(43) Veröffentlichungstag der Anmeldung: **17.09.2008**
(21) Anmeldenummer: 08004226.0
(22) Anmeldetag: 07.03.2008
(51) Int. Cl.: F16L 23/14, F24F 13/02

(54) **Eckwinkelsystem für Verbindungsflanschabschnitte von Blechkanalabschnitten**

(30) Priorität: 13.03.2007 DE 102007012015
(71) Anmelder: Ing.-Büro H. Prechtl KG Anlagentechnik, 95485 Warmensteinach (DE)
(72) Erfinder: Prechtl, Hans-Peter, 95485 Warmensteinach (DE)
(74) Vertreter: LOUIS, PÖHLAU, LOHRENTZ

(57) **Zusammenfassung**

Es wird ein Eckwinkelsystem (52) für Verbindungsflanschabschnitte (54) von Blechkanalabschnitten (56) mit einem ersten und einem zweiten Schenkelteil (10, 32) beschrieben, die jeweils einen Einsteckabschnitt (12) und einen Scheitelabschnitt (14) aufweisen. Die beiden Schenkelteile (10, 32) besitzen die gleiche Wanddicke (W) und sind mit den gleichen Randkonturen jeweils mit einer Rastnoppe (26) und einer Rastaussparung (30) ausgebildet.

## Beschreibung

Die Erfindung betrifft ein Eckwinkelsystem für Verbindungsflanschabschnitte von Blechkanalabschnitten, mit einem ersten und einem zweiten Schenkelteil, die jeweils einen in einen Verbindungsflanschabschnitt einsteckbaren Einsteckabschnitt und einen Scheitelabschnitt aufweisen, wobei die beiden Schenkelteile die gleiche Wanddicke besitzen und ihre Scheitelabschnitte sich im freien Eckbereich benachbarter Verbindungsflanschabschnitte überdecken und jeweils mit einem Schraubloch ausgebildet sind, und jedes der beiden Schenkelteile zwischen dem Einsteckabschnitt und dem Scheitelabschnitt eine Abkantung und an dem vom Einsteckabschnitt abgewandten Außenende des Scheitelabschnittes einen Bördelrand aufweist.

Ein derartiges Eckwinkelsystem ist aus der DE 10 2005 042 016 B3 des Anmelders bekannt. Bei diesem bekannten Eckwinkelsystem ist der Bördelrand des einen Schenkelelementes mit einer seinem Einsteckabschnitt zugewandten Rastnoppe und das zweite Schenkelelement am zugehörigen Längsrand mit einer Rastaussparung ausgebildet, in welche die Rastnoppe im in die Verbindungsflanschabschnitte eingesteckten Zustand der beiden Schenkelteile formschlüssig einrastet. Bei diesem bekannten Eckwinkelsystem ist also ein Schenkelteil mit einer Rastaussparung und das andere Schenkelteil mit einer Rastnoppe ausgebildet. Zur Herstellung der beiden Schenkelteile sind also zwei Schnittwerkzeuge erforderlich. Das stellt einen entsprechenden Werkzeugaufwand dar.

Deshalb liegt der Erfindung die Aufgabe zugrunde, ein Eckwinkelsystem der eingangs genannten Art zu schaffen, bei welchem der Werkzeugaufwand zur Herstellung der beiden Schenkelteile wesentlich reduziert und gleichzeitig die Festlegung der beiden Schenkelteile in den zugehörigen Verbindungsflanschabschnitten eines Bleckkanalabschnittes weiter verbessert ist.

Diese Aufgabe wird erfindungsgemäß durch die Merkmale des Anspruches 1, d.h. dadurch gelöst, dass die Abkantungen der beiden Schenkelteile die gleiche, ihrer halben Wanddicke entsprechende Tiefe besitzen, und dass die beiden Schenkelteile mit den gleichen Randkonturen jeweils mit einer Rastnoppe und einer Rastaussparung ausgebildet sind, wobei die Rastaussparung am Außenlängsrand des jeweiligen Schenkelteiles an dessen Scheitelabschnitt in der Nachbarschaft der Abkantung und die Rastnoppe an dem dem Innenlängsrand zugewandten Innenende des Bördelrandes des jeweiligen Schenkelteiles vorgesehen ist, und die beiden Rastnoppen im in die Verbindungsflanschabschnitte eingesteckten Verbindungszustand der beiden Schenkelteile in die beiden Rastaussparungen formschlüssig einrasten.

Dadurch, dass erfindungsgemäß die beiden Schenkelteile mit den gleichen Randkonturen ausgebildet sind, ergibt sich der Vorteil, dass zur Herstellung der beiden Schenkelteile nur ein einziges Schnittwerkzeug erforderlich ist, so dass die Werkzeugkosten erheblich reduziert sind. Dadurch, dass erfindungsgemäß beide Schenkelteile jeweils mit einer Rastnoppe und einer Rastaussparung ausgebildet sind, ergibt sich der Vorteil einer verbesserten Verriegelung der beiden Schenkelteile und somit eine Verbesserung der Festigkeit der Verbindung der beiden in die Verbindungsflanschabschnitte eingesteckten Schenkelteile. Die Reduktion der Kosten für das Schnittwerkzeug geht also mit einer Verbesserung der Verriegelung und der Festigkeit der Verbindung der beiden Schenkelteile einher. Ein ungewolltes Herausbewegen der Schenkelteile aus den Verbindungsflanschabschnitten eines Blechkanalabschnittes während des Transportes und/oder während der mechanisch festen Verbindung von Blechkanalabschnitten, wird in vorteilhafter Weise zuverlässig verhindert, was einen weiteren erheblichen Vorteil des erfindungsgemäßen Eckwinkelsystems darstellt.

Die Prägung der beiden Schenkelteile, d.h. die Ausbildung der Abkantung zwischen dem Einsteckabschnitt und dem Scheitelabschnitt des jeweiligen Schenkelelementes ist einfach durch Verdrehen des für die Abkantung vorgesehenen Prägestempels um 180° möglich. Auch dieser Prägevorgang ist also vergleichsweise einfach und zeitsparend durchführbar:

Als zweckmäßig hat es sich bei dem erfindungsgemäßen Eckwinkelsystem erwiesen, wenn der jeweilige Bördelrand zwischen seiner distalen Rastnoppe und seinem proximalen Innenende eine Breite besitzt, die kleiner ist als die Breite des Schenkelteiles, weil es dann möglich ist, den Scheitelabschnitt des jeweiligen Schenkelteiles im Übergangsbereich zwischen seinem Außenlängsrand und seinem Außenende mit einer Abrundung auszubilden. Durch diese Abrundungen der Scheitelabschnitte der beiden Schenkelteile werden scharfe Kanten vermieden, so dass eine Verletzungsgefahr ausgeschlossen ist. Das wirkt sich auf die Anforderungen der UW und BG entsprechend positiv aus.

Zur Erhöhung der Formstabilität, d.h. zur Versteifung der beiden Schenkelteile und insbesondere der Einsteckabschnitte derselben, ist es vorteilhaft, wenn die Einsteckabschnitte der beiden Schenkelteile jeweils mit einer länglichen Eindellung ausgebildet sind. Diese Eindellungen können gleichzeitig mit den Abkantungen der beiden Schenkelteile mit Hilfe des oben erwähnten Prägestempels hergestellt werden. Mit Hilfe der besagten Eindellungen wird außerdem eine verbesserte Fixierung der Schenkelteile in den Verbindungsflanschabschnitten eines Blechkanalabschnittes verwirklicht.

Um die beiden Schenkelteile mit ihren Einsteckabschnitten einfach und zeitsparend in die Verbindungsflanschabschnitte eines Blechkanalabschnittes einbringen zu können, ist es zweckmäßig, wenn der vom Scheitelabschnitt abgewandte Endabschnitt des Einsteckabschnittes des jeweiligen Schenkelteiles mit einem Verjüngungsrand ausgebildet ist. Unter dem Gesichtspunkt der Minimierung einer Verletzungsgefahr ist es vorteilhaft, wenn der genannte Verjüngungsrand mit Abrundungen ausgebildet ist.

Zweckmäßig ist es, wenn der vom Scheitelabschnitt abgewandte Endabschnitt des Einsteckabschnittes des jeweiligen Schenkelteiles mit einem Gewichtsreduktionsloch ausgebildet ist.

Weitere Einzelheiten, Merkmale und Vorteile ergeben sich aus der nachfolgenden Beschreibung eines in der Zeichnung dargestellten Ausführungsbeispieles des erfindungsgemäßen Eckwinkelsystems.

Es zeigen:
- Figur 1: ein erstes Schenkelteil des Eckwinkelsystems in einer Draufsicht,
- Figur 2: einen Schnitt entlang der Schnittlinie II-II in Figur 1 durch das erste Schenkelteil,
- Figur 3: eine Draufsicht auf ein zweites Schenkelteil des Eckwinkelsystems,
- Figur 4: einen Schnitt entlang der Schnittlinie IV-IV in Figur 3 durch das zweite Schenkelteil,
- Figur 5: das erste und das zweite Schenkelteil im zusammengebauten Zustand in einer Draufsicht,
- Figur 6: einen Schnitt entlang der Schnittlinie VI-VI in Figur 5, und
- Figur 7: einen Schnitt entlang der Schnittlinie VII-VII in Figur 5.

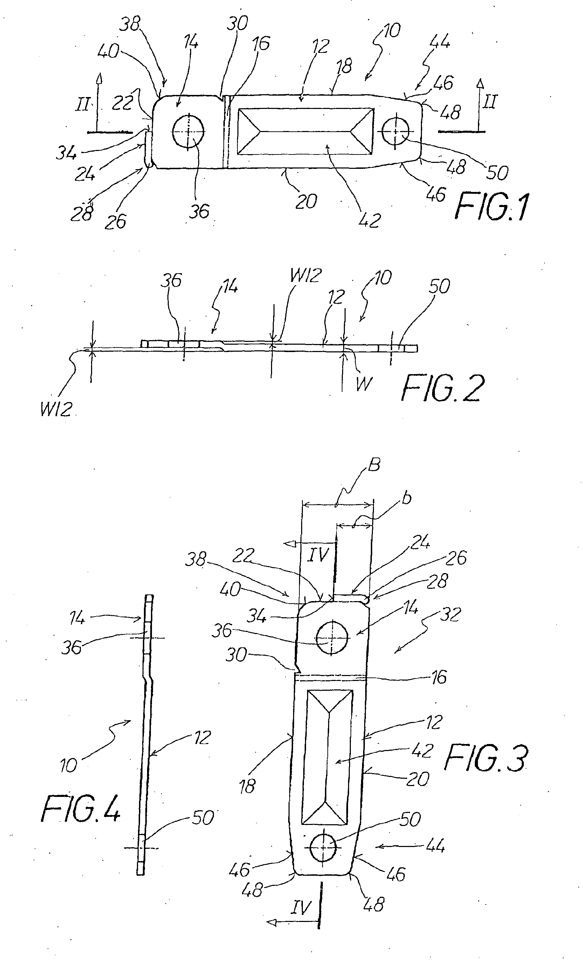

Die Figuren 1 und 2 zeigen ein erstes Schenkelteil 10 des Eckwinkelsystems für Verbindungsflanschabschnitte von Blechkanalabschnitten. Das erste Schenkelteil 10 weist einen Einsteckabschnitt 12 und einen Scheitelabschnitt 14 auf. Der Einsteckabschnitt 12 und der Scheitelabschnitt 14 besitzen die gleiche Breitenabmessung. Zwischen dem Einsteckabschnitt 12 und dem Scheitelabschnitt 14 ist eine Abkantung 16 ausgebildet. Durch die Abkantung 16 ist der Scheitelabschnitt 14 gegen den Einsteckabschnitt 12 um die halbe Wanddicke W/2 versetzt. Mit W ist in Figur 2 die Wanddicke des ersten Schenkelteils 10, d.h. seines Einsteckabschnittes 12 und seines Schenkelabschnittes 14, bezeichnet.

Das erste Schenkelteil 10 weist einen Außenlängsrand 18 und einen Innenlängsrand 20 auf. An dem vom Einsteckabschnitt 12 abgewandten Außenende 22 des Scheitelabschnittes 14 weist der Scheitelabschnitt 14 einen Bördelrand 24 auf, der vom Scheitelabschnitt 14 in Richtung des abgekanteten Einsteckabschnittes 12 wegsteht. Der Bördelrand 24 ist mit einer Rastnoppe 26 ausgebildet. Die Rastnoppe 26 ist an dem dem Innenlängsrand 20 zugewandten Innenende 28 des Bördelrandes 24 vorgesehen.

Das erste Schenkelteil 10 ist außerdem mit einer Rastaussparung 30 ausgebildet, die am Außenlängsrand 18 am Scheitelabschnitt 14 in der Nachbarschaft der Abkantung 16 vorgesehen ist.

Die Figuren 3 und 4 zeigen das zweite Schenkelteil 32, das mit den gleichen Randkonturen wie das erste Schenkelteil 10 ausgebildet ist, wobei in den Figuren 3 und 4 gleiche Einzelheiten mit denselben Bezugsziffern wie in den Figuren 1 und 2 bezeichnet sind. Der einzige Unterschied zwischen dem ersten und dem zweiten Schenkelteil 10 und 32 besteht darin, dass die Abkantung 16 zwischen dem Einsteckabschnitt 12 und dem Scheitelabschnitt 14 in die andere Richtung orientiert ist. Die beiden Schenkelteile 10 und 32 sind mit einem einzigen Schnittwerkzeug herstellbar. Die Prägung, d.h. Formgebung des zweiten Schenkelteiles 32 ist mit demselben Prägestempel wie die Prägung des ersten Schenkelteiles 10 möglich, es braucht nur der Prägestempel zur Formgebung des zweiten Schenkelteiles 32 um 180° gedreht zu werden.

Der jeweilige Bördelrand 24 besitzt zwischen seiner distalen Rastnoppe 26 und seinem proximalen Innenende 34 eine Breite b, die kleiner ist als die Breite B des jeweiligen Schenkelteiles 10, 32. Beispielsweise ist b = B/2.

Der Scheitelabschnitt 14 des jeweiligen Schenkelteiles 10, 32 ist mit einem Schraubloch 36 ausgebildet. Das jeweilige Schraubloch 36 ist vorzugsweise im Zentrum des zugehörigen Scheitelabschnittes 14 vorgesehen.

Der jeweilige Scheitelabschnitt 14 des ersten und zweiten Schenkelteiles 10, 32 ist im Übergangsbereich 38 zwischen seinem Außenlängsrand 18 und seinem Außenende 22 mit einer Abrundung 40 ausgebildet.

Der Einsteckabschnitt 12 des jeweiligen Schenkelteiles 10, 32 ist mit einer länglichen Eindellung 42 ausgebildet. Der vom Scheitelabschnitt 14 abgewandte Endabschnitt 44 des Einsteckabschnittes 12 des jeweiligen Schenkelteiles 10, 32 ist mit einem Verjüngungsrand 46 ausgebildet. Der Verjüngungsrand 46 ist mit Abrundungen 48 ausgebildet.

Der Endabschnitt 44 des Einsteckabschnittes 12 des jeweiligen Schenkelteiles 10, 32 ist mit einem Gewichtsreduktionsloch 50 ausgebildet.

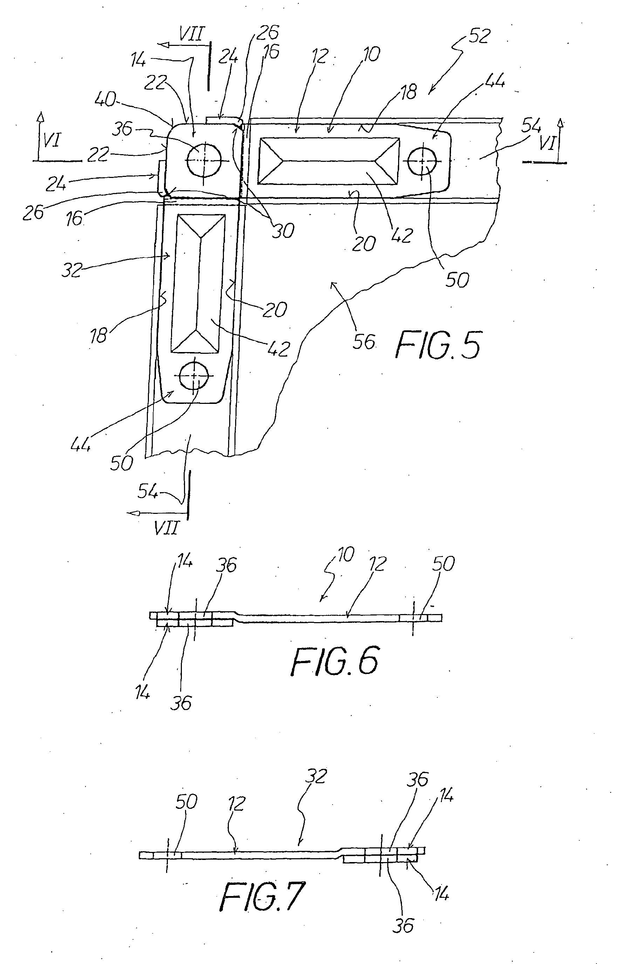

Die Figuren 5, 6 und 7 verdeutlichen das Eckwinkelsystem 52, bestehend aus dem ersten und dem zweiten Schenkelteil 10 und 32 im zusammengebauten und miteinander fest verbundenen Zustand, wobei die Verbindungsflanschabschnitte 54 eines Blechkanalabschnittes 56 in Figur 5 mit dünnen Linien abschnittweise dargestellt sind.

In den Figuren 5 bis 7 sind gleiche Einzelheiten mit denselben Bezugsziffern wie in den Figuren 1 bis 4 bezeichnet, so dass es sich erübrigt, in Verbindung mit den Figuren 5 bis 7 alle Einzelheiten noch einmal detailliert zu beschreiben.

### Bezugsziffernliste:

- 10: erstes Schenkelteil (von 52)
- 12: Einsteckabschnitt (von 10, 32)
- 14: Scheitelabschnitt (von 10, 32)
- 16: Abkantung (zwischen 12 und 14)
- 18: Außenlängsrand (von 10, 32)
- 20: Innenlängsrand (von 10, 32)
- 22: Außenende (von 14)
- 24: Bördelrand (an 22)
- 26: Rastnoppe (an 24)
- 28: Innenende (von 24)
- 30: Rastaussparung (an 18 in 14 bei 16)
- 32: zweites Schenkelteil (von 52)
- 34: Innenende (von 24)
- 36: Schraubloch (in 14)
- 38: Übergangsbereich (zwischen 18 und 22)
- 40: Abrundung (an 38)
- 42: längliche Eindellung (von 12)
- 44: Endabschnitt (von 12)
- 46: Verjüngungsrand (bei 44)
- 48: Abrundungen (an 46)
- 50: Gewichtsreduktionsloch (in 44)
- 52: Eckwinkelsystem (für 54)
- 54: Verbindungsflanschabschnitte (von 56)
- 56: Blechkanalabschnitte

## Patentansprüche

1. Eckwinkelsystem für Verbindungsflanschabschnitte (54) von Blechkanalabschnitten (56), mit einem ersten und einem zweiten Schenkelteil (10 und 32), die jeweils einen in einen Verbindungsflanschabschnitt (54) einsteckbaren Einsteckabschnitt (12) und einen Scheitelabschnitt (14) aufweisen, wobei die beiden Schenkelteile (10, 32) die gleiche Wanddicke (W) besitzen und ihre Scheitelabschnitte (14) sich im freien Eckbereich benachbarter Verbindungsflanschabschnitte (54) im zusammengebauten Zustand überdecken und jeweils mit einem Schraubloch (36) ausgebildet sind, und jedes der beiden Schenkelteile (10, 32) zwischen dem Einsteckabschnitt (12) und dem Scheitelabschnitt (14) eine Abkantung (16) und an dem vom Einsteckabschnitt (12) abgewandten Außenende (22) des Scheitelabschnittes (14) einen Bördelrand (24) aufweist,
**dadurch gekennzeichnet,**
**dass** die Abkantungen (16) der beiden Schenkelteile (10, 32) die gleiche, ihrer halben Wanddicke entsprechende Tiefe (W/2) besitzt, und dass die beiden Schenkelteile (10, 32) mit den gleichen Randkonturen jeweils mit einer Rastnoppe (26) und einer Rastaussparung (30) ausgebildet sind, wobei die Rastaussparung (30) am Außenlängsrand (18) des jeweiligen Schenkelteils (10, 32) an dessen Scheitelabschnitt (14) in der Nachbarschaft der Abkantung (16) und die Rastnoppe (26) an dem dem Innenlängsrand (20) zugewandten Innenende (28) des Bördelrandes (24) des jeweiligen Schenkelteiles (10, 32) vorgesehen ist, und die beiden Rastnoppen (26) im in die Verbindungsflanschabschnitte (54) eingesteckten Verbindungszustand der beiden Schenkelteile (10, 32) in die beiden Rastaussparungen (30) formschlüssig einrasten.

2. Eckwinkelsystem nach Anspruch 1,
**dadurch gekennzeichnet,**
**dass** der jeweilige Bördelrand (24) zwischen seiner Rastnoppe (26) und seinem Innenende (28) eine Breite (b) besitzt, die kleiner ist als die Breite (B) des Schenkelteiles (10, 32).

3. Eckwinkelsystem nach Anspruch 1 oder 2,
**dadurch gekennzeichnet,**
**dass** der Scheitelabschnitt (14) des jeweiligen Schenkelteiles (10, 32) im Übergangsbereich (38) zwischen seinem Außenlängsrand (18) und seinem Außenende (22) mit einer Abrundung (40) ausgebildet ist.

4. Eckwinkelsystem nach einem der Ansprüche 1 bis 3,
**dadurch gekennzeichnet,**
**dass** die Einsteckabschnitte (12) der beiden Schenkelteile (10, 32) jeweils mit einer länglichen Eindellung (42) ausgebildet sind.

5. Eckwinkelsystem nach einem der Ansprüche 1 bis 4,
**dadurch gekennzeichnet,**
**dass** der dem Scheitelabschnitt (14) abgewandte Endabschnitt (44) des Einsteckabschnittes (12) des jeweiligen Schenkelteiles (10, 32) mit einem Verjüngungsrand (46) ausgebildet ist.

6. Eckwinkelsystem nach Anspruch 5,
**dadurch gekennzeichnet,**
**dass** der Verjüngungsrand (46) mit Abrundungen (48) ausgebildet ist.

7. Eckwinkelsystem nach einem der Ansprüche 1 bis 6,
**dadurch gekennzeichnet,**
**dass** der vom Scheitelabschnitt (14) abgewandte Endabschnitt (44) des Einsteckabschnittes (12) des jeweiligen Schenkelteiles (10, 32) mit einem Gewichtsreduktionsloch (50) ausgebildet ist.
